Europäisches Patentamt

European Patent Office

Office européen des brevets

(19)

(11) Numéro de publication: **0 383 032**
**A1**

(12) # DEMANDE DE BREVET EUROPEEN

(21) Numéro de dépôt: **90100896.1**

(51) Int. Cl.5: **A23G 1/04, A23G 1/00**

(22) Date de dépôt: **17.01.90**

(30) Priorité: **14.02.89 CH 512/89**

(43) Date de publication de la demande:
**22.08.90 Bulletin 90/34**

(84) Etats contractants désignés:
**DE FR GB**

(71) Demandeur: **SOCIETE DES PRODUITS NESTLE S.A.**
**Case postale 353**
**CH-1800 Vevey(CH)**

(72) Inventeur: **Meister, Niklaus**
**Moeschbergweg 20**
**CH-3506 Grosshoechstetten(CH)**
Inventeur: **Piek, Hans-Joseph**
**La Raveyre**
**CH-1728 Rossens(CH)**

(54) **Procédé de préparation d'une poudre pour chocolat au lait.**

(57) Pour préparer une poudre pour chocolat au lait ayant un pourcentage élevé de matière grasse libre, on mélange du lait, de la masse de cacao et du sucre, on sépare par centrifugation une phase grasse, une phase aqueuse et un culot, on incorpore le culot dans la phase aqueuse et on concentre la dispersion obtenue, on l'ensemence avec du lactose, on y ajoute la phase grasse pasteurisée et homogénéisée à chaud et on pulvérise le mélange à froid, sous forte pression dans une tour de séchage où règne un courant d'air très chaud.

La poudre obtenue a un arôme franc de cacao et une note lactée. Ses propriétés rhéologiques facilitent sa transformation en chocolat.

EP 0 383 032 A1

EP 0 383 032 A1

## Procédé de préparation d'une poudre pour chocolat au lait

La présente invention concerne un procédé de préparation d'une poudre entrant dans la fabrication du chocolat au lait.

Selon un procédé traditionnel, de mélange à sec, le chocolat au lait est fabriqué à partir d'un mélange de poudre de lait, de sucre, de masse et de beurre de cacao qui constitue le mélange brut de chocolat. Ce mélange est finement broyé et la poudre qui en résulte est raffinée et liquéfiée par malaxage dans des conches. Ensuite la masse de chocolat est tempérée et moulée. Le mélange brut de chocolat doit avoir une humidité résiduelle la plus faible possible pour pouvoir être travaillé de façon satisfaisante dans les conches et pour que la pâte ait les propriétés rhéologiques convenant au moulage et au démoulage. Pour obtenir ce résultat, le lait est séché en couche mince sur des cylindres chauffés, ce qui endommage ses protéines et provoque une perte de l'arôme lacté.

Selon un autre procédé d'application courante, le chocolat brut est constitué de "crumb", de sucre et de beurre de cacao. Le crumb est le produit du séchage sous vide, puis de la mouture d'un mélange de masse de cacao et de lait concentré sucré. Ce procédé confère au chocolat un arôme caramélisé, fruité, non lacté.

Les procédés précédents nécessitent un conchage prolongé, de l'ordre de 24 à 48 h.

Un autre procédé connu, illustré par exemple par le brevet britannique No 783.861, se distingue des procédés précédents par le fait que la masse de cacao et le sucre sont mélangés à du lait frais en présence de lécithine, puis le mélange liquide émulsifié est séché sous forme de film sur des cylindres chauffés. Le mélange intime des principaux composants du chocolat sous forme liquide permettrait une amélioration des qualités organoleptiques du chocolat en préservant l'arôme lacté.

Nous avons constaté que le procédé de séchage sur cylindres provoque une perte des arômes volatils du cacao, une perte de la valeur nutritionnelle des protéines du lait par réaction de Maillard ainsi qu'une gélatinisation de l'amidon du cacao, laquelle a des effets défavorables sur la rhéologie du chocolat. Le chocolat obtenu est fade.

L'invention a pour but de remédier aux inconvénients des procédés connus en fournissant une poudre de chocolat brut possédant un arôme franc de cacao et une note lactée et dont les propriétés rhéologiques facilitent sa transformation en chocolat.

Elle concerne un procédé de préparation d'une poudre pour chocolat au lait, dans lequel on mélange une masse de cacao, du lait et du sucre et on sèche le mélange, caractérisé par le fait que l'on sépare par centrifugation une phase grasse, une phase aqueuse et un culot à partir de ce mélange, on disperse le culot dans la phase aqueuse que l'on pasteurise et concentre, on refroidit la dispersion obtenue, on l'ensemence avec des cristaux de lactose et on laisse cristalliser le lactose qu'elle contient, on mélange la suspension contenant le lactose cristallisé avec la phase grasse pasteurisée séparément et on sèche le mélange par pulvérisation.

Pour mettre en oeuvre le procédé, on pasteurise du lait, de préférence entier frais dans des conditions ménagées, par exemple à 70-80° C pendant quelques s à 30 s. Dans de telles conditions, on ne décèle pas d'inactivation de lysine notable. On refroidit ensuite le lait à 30-60° C, par exemple à environ 50° C.

On fait fondre à 40-80° C, par exemple à environ 50° C, une masse de cacao provenant de la mouture des fèves de cacao torréfiées décortiquées et dépelliculées. Une telle masse peut être du grué contenant tout le beurre du cacao présent dans les fèves, soit environ 54% en poids. Elle peut être le tourteau obtenu à partir du grué par mouture du gâteau de pressage après séparation d'une partie du beurre de cacao et contenir 28 à 32% en poids de beurre de cacao. On ajoute à la masse de cacao fondue du sucre cristallisé ou sous forme d'un sirop aqueux concentré, puis on incorpore le mélange de sucre et de cacao dans le lait pasteurisé sous agitation. Les proportions pondérales respectives de masse de cacao / sucre / lait, sont 3 à 9 / 2 à 8 / 84 à 95, et par exemple 4 / 3 / 93. De préférence, on refroidit le mélange rapidement à 5-10° C, pour empêcher la croissance des micro-organismes et pour éviter des pertes en arômes volatils.

On chauffe ensuite le mélange à 40-80° C, de préférence à environ 50° C et on le traite sans attendre dans un séparateur centrifuge. La séparation est de préférence poussée, de préférence à 1500-2000 t/min pendant 0,2 à 1 s. On recueille une phase grasse de couleur brun clair constituée de la graisse de lait, du beurre de cacao et des arômes liposolubles du cacao contenant 20 à 50% en poids de matières grasses; une phase aqueuse constituée essentiellement de lait écrémé, et un culot comprenant des solides du cacao.

On refroidit ensuite la phase aqueuse, de préférence aussitôt après sa séparation, à 5-10° C, puis on y incorpore le culot dans un moulin colloïdal. On pasteurise la dispersion produite dans des conditions ménagées, par exemple à 70-80° C pendant quelques s à 30 s, afin de minimiser l'inactivation de la lysine

2

par maillardisation ainsi que la gélatinisation de l'amidon du cacao.

Après la pasteurisation, on concentre la dispersion, par exemple par évaporation au moyen d'un évaporateur à film tombant jusqu'à, en poids, 30-60% et de préférence à 45% environ de matières sèches, puis on refroidit le concentrat à une température de 5-15°C, de préférence à environ 10°C jusqu'au traitement ultérieur. On peut en variante refroidir le concentrat à environ 35°C et amorcer directement la cristallisation du lactose comme indiqué ci-après.

L'étape suivante consiste à ensemencer le concentrat refroidi avec des cristaux de lactose et à promouvoir la cristallisation du lactose sous forme de fins cristaux. Le lactose d'ensemencement doit être sous forme de fins cristaux dont les dimensions sont de préférence inférieures ou égales à 2 m. La quantité de lactose ajoutée doit être suffisante pour amorcer la cristallisation, par exemple environ 0,05% en poids des matières sèches. On peut effectuer la cristallisation dans des cuves à double manteau, à une température ne dépassant pas 35°C. De préférence, l'ensemencement a lieu à environ 35°C et on refroidit jusqu'à environ 10°C lors de la cristallisation. La cristallisation dure 3 à 30 h et de préférence environ 5 h. On l'effectue avantageusement sous agitation lente et continuelle.

On refroidit ensuite la dispersion obtenue à une température ne dépassant pas 10°C, de préférence à environ 5°C. On ajoute à la dispersion refroidie la phase grasse séparée précédemment, elle-même avantageusement refroidie à une température ne dépassant pas 10°C et de préférence à environ 5°C. La phase grasse aura été avantageusement préalablement chauffée à 40-80°C, puis pasteurisée dans des conditions ménagées à 63-140°C pendant quelques s à 30 min., par exemple à environ 120°C pendant environ 5 s., puis homogénéisée à 5-80°C, de préférence à environ 50°C, sous une pression de 20 à 100 bar, de préférence à environ 50 bar. Le mélange contient 40-50% en poids de matières sèches.

On pulvérise ensuite le mélange sous une pression de 60-100 bar au niveau de la buse et à une température ne dépassant pas 10°C, dans une tour de séchage où règne un courant d'air très chaud sous pression, de manière que la température de l'air de sortie soit supérieure ou égale à 80°C.

On peut, dans un mode de réalisation particulier du séchage par pulvérisation, protéger le concentrat, en particulier les matières grasses qu'il contient, contre l'oxydation qui pourrait intervenir lors du séchage. Pour ce faire, on peut injecter un gaz inerte, de préférence l'azote dans le concentrat avant de le pulvériser.

En variante, on peut ajouter au concentrat un antioxydant liposoluble, de préférence naturel, par exemple un mélange de tocophénols à raison de 100 à 200 ppm (parties par million) en poids, avant la pulvérisation.

Avantageusement, toutes les mesures prises de séparation des phases grasse et non grasse, de cristallisation du lactose sous forme de fins cristaux, d'adjonction de la phase grasse homogénéisée, de refroidissement du concentrat et de pulvérisation de celui-ci à froid, de préférence à une température de 5 à 10°C sous forte pression dans un courant d'air très chaud, concourent à l'obtention d'un maximum de matière grasse à l'état libre ainsi que de lactose à l'état cristallisé et au maintien de ceux-ci dans ces états.

Par "matière grasse à l'état libre" on entend que celle-ci n'est pas enrobée par des matières protectrices, par exemple des émulsifiants ou des protéines. Dans l'exposé, le pourcentage de matière grasse libre est déterminé à partir de la mesure gravimétrique de la quantité de matière grasse extractible par l'éther de pétrole rapportée à la quantité de matière grasse totale.

Après séchage, la poudre a un pourcentage d'humidité de 1 à 5% et de préférence 3% en poids. Le lactose est sous forme de cristaux de dimensions 10 à 70 μm.

Au lieu de mettre en oeuvre du lait entier, on peut envisager de partir de lait partiellement écrémé et d'y ajouter à n'importe quelle étape du procédé, mais de préférence juste avant la pulvérisation, la matière grasse lactique, par exemple sous forme de matière grasse lactique anhydre ou de fraction de matière grasse lactique anhydre, de manière que la poudre contienne la matière grasse lactique qui aurait été apportée par du lait entier.

On peut bien entendu mélanger à la poudre avant ou après séchage des agents d'aromatisation. De préférence, on met la poudre en sacs dans une atmosphère inerte, par exemple d'azote, on ferme les sacs et on les entrepose, de préférence à une température inférieure à 10°C.

L'exemple ci-après illustre l'invention. Dans celui-ci, les pourcentages et parties sont pondéraux sauf indication contraire.

Exemple

On pasteurise du lait entier frais à 80°C pendant 15 s. dans un échangeur tubulaire, puis on le refroidit à 50°C.

On fait fondre à part à 50°C une masse de cacao, provenant de la mouture de fèves torréfiées et

décortiquées, contenant 54% de graisse.

A 93 parties de lait pasteurisé, on mélange 4 parties de masse de cacao fondue et 3 parties de sucre cristallisé à 50°C, puis on refroidit rapidement le mélange à 10°C. On réchauffe le mélange à 50°C, puis on le traite dans un séparateur-décanteur à 1800 t/min pendant 0,5 s.

On obtient une phase grasse de couleur brun clair à 30% de matières grasses constituées par la graisse lactique et le beurre de cacao, contenant les arômes liposolubles du cacao; une phase aqueuse constituée essentiellement de lait écrémé ainsi qu'un culot contenant principalement les solides non gras et non hydrosolubles du cacao.

On refroidit rapidement la phase aqueuse à 10°C et on y incorpore le culot précédent sous agitation dans un moulin colloïdal. On pasteurise la dispersion obtenue à 80°C pendant 30 s. dans un échangeur tubulaire, puis on la concentre à 45% de matières sèches dans un évaporateur à film tombant à triple effet. On refroidit ensuite le concentrat à 35°C au moyen d'un échangeur tubulaire, puis on l'ensemence avec 0,05 partie de cristaux de lactose de dimensions inférieures ou égales à 2 µm et on continue le refroidissement jusqu'à 10°C pendant 5 h sous agitation lente et continue. On refroidit ensuite le concentrat contenant le lactose cristallisé à 5°C dans un échangeur tubulaire.

On chauffe la phase grasse, séparée par centrifugation comme indiqué précédemment, à 75°C, puis on la traite à 130°C pendant 5 s par injection directe de vapeur et on la refroidit à 50°C dans un échangeur tubulaire. On l'homogénéise ensuite dans un homogénéisateur à un étage à 50 bar et on la refroidit à 5°C dans un échangeur tubulaire.

Dans le concentrat contenant le lactose cristallisé, on incorpore la phase grasse précédente sous agitation.

On pulvérise ensuite le mélange ayant 45% de matières sèches à la pression de 75 bar au moyen d'une pompe à haute pression dans une tour de séchage, dans un courant d'air de pression 0,16 bar et de température 350°C. A la sortie de la tour, l'air a une température de 85°C et une humidité relative de 15%.

La poudre (A) recueillie au bas de la tour a les caractéristiques physiques suivantes:

| Teneur en eau | 3% |
|---|---|
| Poids spécifique (kg/l) | 0,58 |
| Teneur en matières grasses | 30% |
| | dont 82% à l'état libre (le pourcentage de matières grasses à l'état libre est déterminé comme indiqué précédemment) |

Le lactose est sous forme de cristaux de dimensions 10 à 70 µm.

Exemple comparatif

A titre de comparaison, on prépare une poudre (B) pour chocolat au lait de la manière suivante. A 45 parties de lait frais, à 12,5% de matières sèches, on mélange à 25°C, 1,8 partie de saccharose, 1,6 partie de masse de cacao à 31% de matière grasse et 0,03 partie de phosphate disodique. Après pasteurisation du mélange à 90°C pendant 1 min., on le concentre dans un évaporateur tubulaire à 67% de matières sèches puis on le refroidit à 25°C.

On sèche ensuite le concentrat sur un sécheur à cylindres de 18 m² chauffés à la vapeur à une pression de 4 bar et tournant à 2 t/min. jusqu'à 97% de matières sèches. A la sortie du sécheur, le produit est tamisé au travers d'une grille à mailles de 3 mm. Sa température et 40-50°C.

On compare les propriétés organoleptiques des poudres A et B et de leurs solutions aqueuses,les propriétés nutritionnelles des poudres A et B ainsi que leur aptitude à la transformation en chocolat.

1. Propriétés organoleptiques

La poudre A est de couleur claire, montre une odeur et un goût typiques de cacao et a une structure fine. La poudre B est foncée, n'a pratiquement pas de goût et d'odeur de cacao et sa structure est granuleuse.

Une solution de A à 40% dans l'eau est fluide et légèrement visqueuse. Son goût est agréable.

Par contre, une solution de B à 40% dans l'eau est très visqueuse, gélifiée. Elle n'a pratiquement pas de goût.

## 2. Propriétés nutritionnelles

La poudre A ne présente pratiquement pas d'endommagement des protéines de lait alors que celles-ci sont endommagées dans le cas de la poudre B. La lysine est inactivée à environ 20% pour la poudre B et à raison de moins de 5% dans le cas de la poudre A.

## 3. Aptitude à la transformation en chocolat

On fabrique du chocolat à partir des poudres A et B de la matière suivante:

### Chocolat A:

On mélange 39,5 parties de la poudre A, 15,4 parties de beurre de cacao et 40 parties de sucre cristallisé dans une malaxeuse-mélangeuse. Ce mélange est ensuite finement broyé à une grandeur moyenne de particules d'environ 13 $\mu$m puis conché 24 heures à une température entre 53 et 58° C. Le mélange est complété par addition de 5 parties de beurre de cacao lors de la mise en conche et par addition de 0,2 partie de lécithine et 0,01 partie de vanille en solution alcoolique vers la fin du conchage. Finalement la masse de chocolat est tempérée et moulée.

### Chocolat B

On mélange 37 parties de poudre B, 18 parties de beurre de cacao, 39 parties de sucre cristallisé, 2 parties de masse de cacao et 0,1 partie de lécithine dans une malaxeuse-mélangeuse. Ce mélange est finement broyé jusqu'à une finesse des particules de 13 $\mu$m. Ensuite le mélange est introduit en conche sous addition par étape de 0,06 partie de lécithine, 3,6 parties de beurre de cacao et de 0,5 partie de beurre fondu. Vers la fin du conchage on ajoute encore 0,23 partie de lécithine et 0,01 partie de vanilline en solution alcoolique. Finalement la masse de chocolat est tempérée et moulée.

### Conclusions

Malgré l'adjonction supplémentaire de masse de cacao correspondant à un taux de solides non-gras du cacao équivalent à celui du chocolat A, le chocolat B est fade. De plus l'utilisation de la poudre B rend le conchage plus difficile, nécessitant une addition plus élevée de lécithine et une mise en conche avec de grandes précautions pour éviter un crémage de la masse. Le séchage sur cylindre a entraîné une gélification de l'amidon du cacao.

Par contre, le chocolat A présente un goût crémeux agréable et un arôme franc de cacao, sa texture n'est pas collante. Il est facile à concher et à démouler.

## Revendications

1. Procédé de préparation d'une poudre pour chocolat au lait, dans lequel on mélange une masse de cacao, du lait et du sucre et on sèche le mélange, caractérisé par le fait que l'on sépare par centrifugation une phase grasse, une phase aqueuse et un culot à partir de ce mélange, on disperse le culot dans la phase aqueuse que l'on pasteurise et concentre, on refroidit la dispersion obtenue, on l'ensemence avec des cristaux de lactose et on laisse cristalliser le lactose qu'elle contient, on mélange la suspension contenant le lactose cristallisé avec la phase grasse pasteurisée séparément et on sèche le mélange par pulvérisation.

2. Procédé selon la revendication 1, caractérisé par le fait que l'on met en oeuvre du lait entier pasteurisé à 70-80°C pendant quelques s. et refroidi à 30-60°C.

3. Procédé selon la revendication 1, caractérisé par le fait que l'on introduit une masse de cacao préalablement fondue à 40-80°C et du sucre dans le lait sous agitation et que l'on refroidit rapidement le mélange à 5-10°C.

4. Procédé selon la revendication 1, caractérisé par le fait que l'on concentre la dispersion du culot dans la phase aqueuse jusqu'à 30-60% en poids de matières sèches et que l'on refroidit le concentrat à une température d'environ 35°C, que l'on ensemence directement le concentrat refroidi avec des cristaux de lactose, ou, si l'on diffère l'ensemencement, que l'on refroidit le concentrat à 5-15°C puis qu'on le réchauffe à environ 35°C au moment de l'ensemencement, que l'on provoque la cristallisation du lactose sous forme de fins cristaux sous agitation lente et continuelle pendant 3 à 30 heures et que l'on refroidit la dispersion obtenue à une température ne dépassant pas 10°C.

5. Procédé selon la revendication 1, caractérisé par le fait que l'on pasteurise la phase grasse, puis on l'homogénéise à chaud et on la refroidit à une température ne dépassant pas 10°C.

6. Procédé selon la revendication 1, caractérisé par le fait que l'on protège les matières grasses contre l'oxydation durant le séchage en injectant dans le concentrat un gaz inerte ou en y ajoutant un antioxydant liposoluble juste avant la pulvérisation.

7. Procédé selon l'une des revendications 1 à 7, caractérisé par le fait que l'on pulvérise le concentrat dans une tour de séchage à une température ne dépassant pas 10°C sous une pression de 60-100 bar et qu'on le sèche à l'air chaud dans des conditions telles que l'air sortant de la tour soit à une température supérieure ou égale à 80°C.

8. Poudre pour chocolat au lait obtenue par la mise en oeuvre du procédé selon l'une des revendications 1 à 7.

9. Procédé de fabrication de chocolat au lait, caractérisé par le fait qu'on ajoute à la poudre selon la revendication 8 du saccharose cristallisé et du beurre de cacao, que l'on broye finement et que l'on conche le mélange, que l'on ajoute de la lécithine et le cas échéant de la vanilline, que l'on tempère la masse obtenue, qu'on la verse dans des moules et que l'on démoule le chocolat.

10. Chocolat au lait obtenu par la mise en oeuvre du procédé selon la revendication 9.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 223 872  (NESTLE S.A.) <br> * Page 2, ligne 40 – page 3, ligne 47; exemple 11 * <br> --- | 1-10 | A 23 G    1/04 <br> A 23 G    1/00 |
| Y | GB-A- 578 078  (NYROP) <br> * Page 1, lignes 47-106; page 2, lignes 14-68; revendications 1,2,4,7,8,9,10 * <br> --- | 1-10 | |
| A | US-A-3 671 273  (GUNTER) <br> --- | | |
| Y | NL-C-  69 656  (NYROP) <br> * Page 1, lignes 76-83 * <br> ----- | 3 | |

|  |  |
|---|---|
|  | **DOMAINES TECHNIQUES RECHERCHES (Int. Cl.5)** |
|  | A 23 G |

Le présent rapport a été établi pour toutes les revendications

| Lieu de la recherche | Date d'achèvement de la recherche | Examinateur |
|---|---|---|
| LA HAYE | 09-03-1990 | LEPRETRE F.G.M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................
& : membre de la même famille, document correspondant

EPO FORM 1503 03.82 (P0402)